# EUROPEAN PATENT APPLICATION

(11) **EP 2 343 455 A1**
(43) Date of publication of application: **13.07.2011**
(21) Application number: 10250022.0
(22) Date of filing: 07.01.2010
(51) Int. Cl.: F03D 11/02, F03D 11/00, F03D 7/02

(54) **Wind energy power plant having a rotor blade pitch actuator**

(71) Applicant: Vestas Wind Systems A/S, 8940 Randers - SV (DK)
(72) Inventor: Sukumaran, Vivek Anand, Chennai 600073 (IN)
(74) Representative: Reeve, Nicholas Edward

(57) **Abstract**

A wind energy power plant having a rotor blade pitch actuator is described. A rotary motor 35 drives a rotating shaft 61 that is part of linear actuating rod 33. The rotation of shaft 61 is converted into translational movement of the second shaft 62, by means of non-rotating collar 63 mounted on shaft 61. The second shaft 62 acts on blade root traverse 31 which cooperates with the blade roots of one or more rotor blades to change the pitch. The second shaft 62, and collar 63 in cooperation with the first shaft 61 form a closed chamber 64 in which the first shaft 61 rotates. Lubricating fluid 65 can be included in the chamber 64 to increase the working life of the moving parts. Rotating shaft 61 is received inside rotary motor 35 by means of an annular collar 44 attached directly to the motor's rotor 36.

## Description

This invention relates to a wind energy power plant having a rotor blade pitch actuation system.

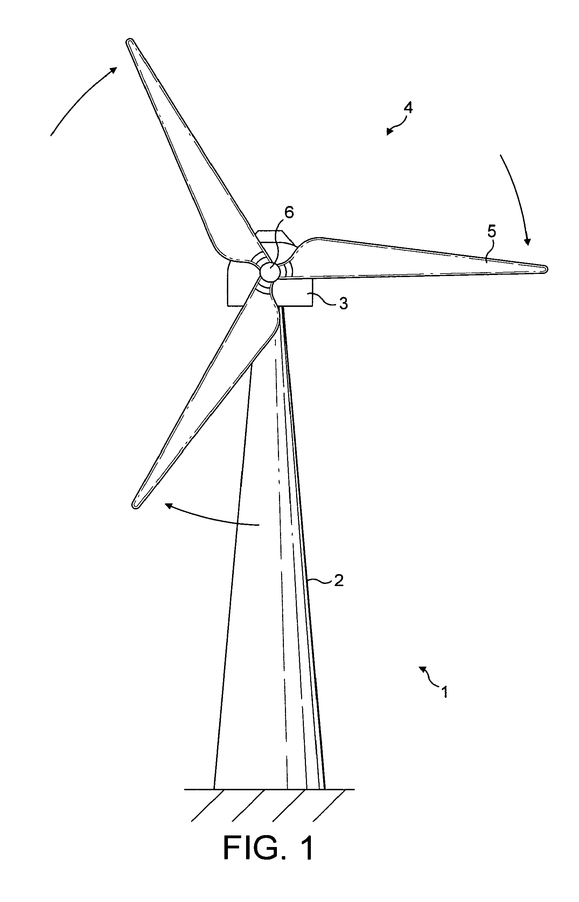

Figure 1 illustrates a wind energy power plant comprising a wind turbine 1. The wind turbine 1 comprises a tower 2 on which the nacelle 3 is mounted. A wind turbine rotor 4 comprising at least one wind turbine blade 5 is mounted on a hub 6. The hub 6 is connected to the nacelle 3 through a low speed shaft (not shown) extending from the front of the nacelle. The wind turbine illustrated in Figure 1 may be a small model intended for domestic or light utility usage, or may be a large model, such as one that is suitable for use in large scale electricity generation on a wind farm for example. In the latter case, the diameter of the rotor could be as large as 100 metres or more.

In wind turbine power generation, the power efficiency of the turbine is largely dependent on two factors, the pitch angle and the tip speed ratio. The pitch angle is the angle at which the rotor blade is orientated relative to the rotor plane, namely the direction in which the rotor blade is rotating. The orientation of the blade is assessed with respect to the blade chord which connects the leading and trailing edge.

The operation of a wind turbine can broadly be classified as either partial load or full load. In partial load operation, the blades of the wind turbine are rotating and power is being produced, but due to low wind speeds the power generated is below the maximum possible or rated power value for the turbine. In such cases, it is desirable to maximise the power that can be extracted by angling the wind turbine fully into the wind, and for pitch controlled wind turbines, by changing the pitch angle of the blades to maximise the lift on the blade. For full load operation, or at wind speeds that are too high, the wind turbine has to be carefully controlled so that damage to the wind turbine is avoided.

In stall controlled wind turbines without pitch control, the blades are connected to the rotor hub at a fixed angle, but are aerodynamically shaped so that, when the incident wind speed is in excess of a predetermined value, turbulence is created on the leeward side of the blade. The turbulence results in the lift experienced by the blade, and consequently the generated power, being limited to a range dependent on the aerodynamic shape chosen.

For pitch controlled wind turbines, at wind speeds that are within the range of safe operating speeds for power generation, the way in which the blades are pitched is largely the same for all designs, namely they are pitched into the wind as much as possible in order to extract the maximum energy from the incident wind. If the blades are pitched too much, however, then they will cause a stall in the flow of wind around the blades. This principle is used in active stall control wind turbines to protect the generator from overloads caused by excessive wind speeds. However, during normal operation a stall condition is undesirable as it means that the wind turbine is not operating efficiently.

In full load operation, the wind turbine blades are rotating and power is being produced, but the power generated is now at a maximum and there is a danger of overloading the generator or on the grid. In such cases, the blades or the turbine itself can be angled with respect to the wind to reduce the tip speed and reduce the generated power. In pitch controlled wind turbines for example, the blades may be deliberately under-pitched, by angling them out of the wind in order to reduce the power extracted and avoid overloading the generator. In active stall wind turbines, the blades are actively pitched further into the wind, and are overpitched to such an extent that stall-like conditions are deliberately introduced to reduce the power extracted from the wind. In effect, the efficiency is tailored to meet the maximum rated power.

There is therefore a need for a pitch actuation system that can control the pitch of the wind turbine blade quickly and reliably to maintain the optimal pitch, and avoid undesirable stall conditions. Additionally, due to the limited space and weight constraints in the nacelle and rotor hub of most wind turbines, it is necessary that the pitch actuation system have a small foot print, and not be unduly heavy or complicated in construction. Due to the abundance of fast moving mechanical parts and heavy electrical generation equipment, the temperature in the interior of the nacelle can often become quite high subjecting the equipment to temperature related operational stresses. As wind turbines are more of often than not located in remote locations, there is therefore a requirement that the pitch actuation system operate reliably under such conditions and easy to maintain or repair.

### SUMMARY OF THE INVENTION

According to the invention, there is a provided a wind energy power plant comprising a nacelle, one or more rotor blades connected to a rotor hub, and a rotor blade pitch actuator, the rotor blade pitch actuator comprising: a first shaft, mounted for rotational movement around a longitudinal axis of the actuator; a second shaft, mounted for translational movement along the longitudinal axis of the actuator, wherein the second shaft and the first shaft are situated so that one is at least partly housed inside the other, and the second shaft is coupled to the blade root of at least one of the one or more rotor blades, such that the translational movement of the second shaft along the first longitudinal axis results in rotation of the blade root and adjustment of the blade pitch; a motor, coupled to the first shaft for driving its rotation; a linkage coupled to the first shaft for converting the rotational motion of the first shaft into translational motion of the second shaft.

The pitch actuator employs a first rotating shaft and a second translational shaft for coupling the torque of the motor to the blade root to effect rotation of the blade root and a change in blade pitch. The second shaft and the first shaft are mounted so that one is at least partly housed inside the other, as this provides a stable arrangement of the moving parts given the high loads and torque to which they are subjected, and means that the actuation system utilises space more effectively.

In one embodiment, the first shaft is mounted to rotate inside a reservoir of lubricating fluid. In practice, the high speed of rotation of the first shaft under the action of the motor leads to the generation of heat, and attrition in the moving parts that connect to the first shaft. By housing the first shaft in a reservoir of lubricating fluid, heat is drawn away from the rotating parts and their working life is increased. Advantageously, the second shaft may comprise a closed chamber in which the first shaft is received, and which contains the lubricating fluid, as this utilises space more effectively.

In one embodiment, the linkage is a threaded collar, sealably engaging the second shaft, and mounted on the first shaft member for translational movement along the longitudinal axis. The threaded collar converts the rotation of the first shaft into the translational movement of the second shaft, and is therefore subject to much wear and tear. It can be advantageous to provide this as a separate component to the second shaft, so that it can easily be maintained and replaced if necessary. The collar sealable engages with the second shaft and the first shaft forming a lid for the closed chamber in the second shaft. In this way, the fluid in the closed chamber can be topped up or replaced. In one embodiment, the first shaft may be a ball screw and the linkage the ball screw nut.

In one embodiment, the wind energy power plant comprises a load sensor located between the threaded collar and the second shaft. The positioning of the load sensor between the threaded collar and the second shaft allows the actual force applied to the shaft and subsequently the mechanism turning the blade root to be accurately measured.

In an alternative embodiment, the wind energy power plant comprises a threaded section on the first shaft and a corresponding threaded section on the second shaft, such that the second linkage is constrained for longitudinal motion along the first longitudinal axis. This allows the threaded collar to be omitted and provides a direct connection between the first and second shaft that minimises the number of interlocking parts.

Preferably, the first and second shafts are arranged coaxially with respect to one another, as this arrangement has been found to provide stability given the high loads and torques involved in the system.

In one embodiment, the motor is an electric motor having a motor body, a rotor and a stator, and the first shaft is coupled to the rotor and extends from the motor body on one side towards the second shaft. The motor can be a high torque electric motor for providing the driving force for responsive pitch adjustment. In comparison to a hydraulic motor, an electric motor takes up less space in the nacelle or rotor hub, and does not require a reservoir of hydraulic fluid to operate.

Advantageously, the first shaft and rotor can be connected directly to one another, and mounted to rotate collinearly about the same longitudinal axis. This couples the rotational force from the motor directly to the first shaft, without the need for additional gearing. Furthermore, the arrangement is highly stable as both rotor and first shaft rotate about a common central axis.

In one embodiment, the motor body comprises a mounting section, on the opposite side of the motor to the second shaft for attachment to the wind turbine, and wherein the first shaft is received in the mounting section at a rotatable joint. Placing the mounting section on the opposite side of motor body to the second shaft, allows the weight of the motor and first shaft, and the operational forces they experience to be stabilised against the peripheral support provided by the mounting section and its connection to the nacelle or rotor hub. Additionally, threading the first shaft through a rotatable joint located in the mounting section, allows the arrangement to be further stabilised.

The wind energy power plant may also comprise a controller disposed at the mounting section for controlling the motor and the speed of rotation of the rotor and the first shaft. Advantageously, the controller comprises a sensor mounted on the first shaft in the mounting section for determining the speed of rotation. The location of the sensor directly on the first shaft allows accurate sensing of the rotational velocity of the first shaft without the need for additional gearing, and avoids slipping between the shaft and the sensor giving false values. The proximity of the sensor to the controller at the mounting section allows for easy connection.

In alternative embodiments, the motor may be a hydraulic motor. In this case the first shaft is a rotatable drive shaft extending from the motor.

The second shaft of the wind energy power plant may also comprise, at one end, a blade root traverse, coupled to each of the rotor blade roots, for converting translational movement of the second shaft into rotational movement of each of the rotor blade roots. This reduces the number of moving parts required in the system and means that the blade pitch of each of the blades can be changed in unison.

In this embodiment, the blade root traverse comprises a compartment having one or more bearings, and the end of the second shaft is received in the compartment and supported by the one or more bearings. This decouples the second member from any torque experienced by the blade root traverse, such as when it engages with the rotor blade roots.

In one embodiment, there is an axle at the end of the second shaft having a smaller diameter than the second shaft, and supported by the one or more bearings. The axle allows the second shaft to be securely attached to the blade root traverse.

In a further embodiment, the compartment is housed inside the blade root traverse. This allows space in the hub to be conserved as the bearings and the end of the second shaft supported by them can be housed at least partly inside the blade root traverse. In one embodiment , the end of the second shaft may then be open, so that the closed chamber is defined by the second shaft and the inner compartment of the blade root traverse. This configuration provides the greatest saving in space.

In a further example, the wind energy power plant comprises a rigid support member coupled between the blade root traverse and the body of the motor, to protect the first and second shafts from bending torques. The end of the rigid support member may slideably engage with a slide member connected to the body of the motor as the second shaft moves translationally.

The pitch actuation system may be located solely within in the rotor blade hub, due to its small foot print and efficient use of space. This frees room in the nacelle for other equipment or as operational space that can be used by a maintenance engineer.

### BRIEF DESCRIPTION OF THE DRAWINGS

The invention will now be described in more detail by way of example and with reference to the drawings in which:
Figure 1 is a schematic illustration of a wind turbine;
Figure 2 is schematic illustration showing a cross sectional view through a wind turbine rotor hub and nacelle;
Figure 3 is an elevation view of a known pitch actuation system;
Figure 4 is an elevation view of a first example embodiment of the invention, showing a pitch actuation system;
Figure 5 is an enlarged cross-sectional view of the drive end of the pitch actuation system shown in Figure 5;
Figure 6 is a cross-sectional view of the pitch actuation system illustrated in Figure 4;
Figure 7 is an enlarged cross-sectional view of the traverse end of the pitch actuation system in an alternative embodiment;
Figure 8 is a cross-sectional view of the pitch actuation system illustrated in Figure 4 in a further embodiment; and
Figure 9 is a cross sectional representation of a rod and guide mechanism shown in Figure 6.

### DETAILED DESCRIPTION OF PREFERRED EMBODIMENTS

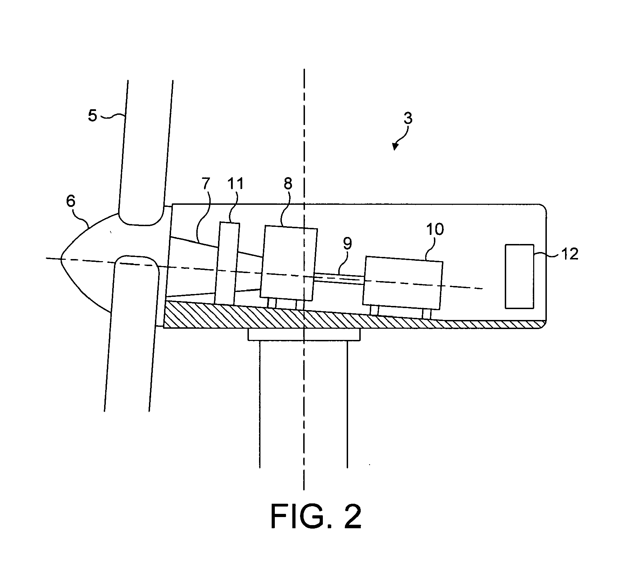

Figure 2 illustrates a schematic view of the interior of the nacelle 3 in an example wind turbine, such as that shown in Figure 1. A main drive shaft 7, supported by a main bearing 11 extends from the hub 6 and is received in a gear box 8. A secondary shaft 9 extends from the gear box 8 and into the generator 10. The nacelle 3 may also comprise a power converter, a transformer 12, as well as ancillary apparatus, such as control devices, sensors, heating and lighting units, hydraulic systems, cooling systems and so on.

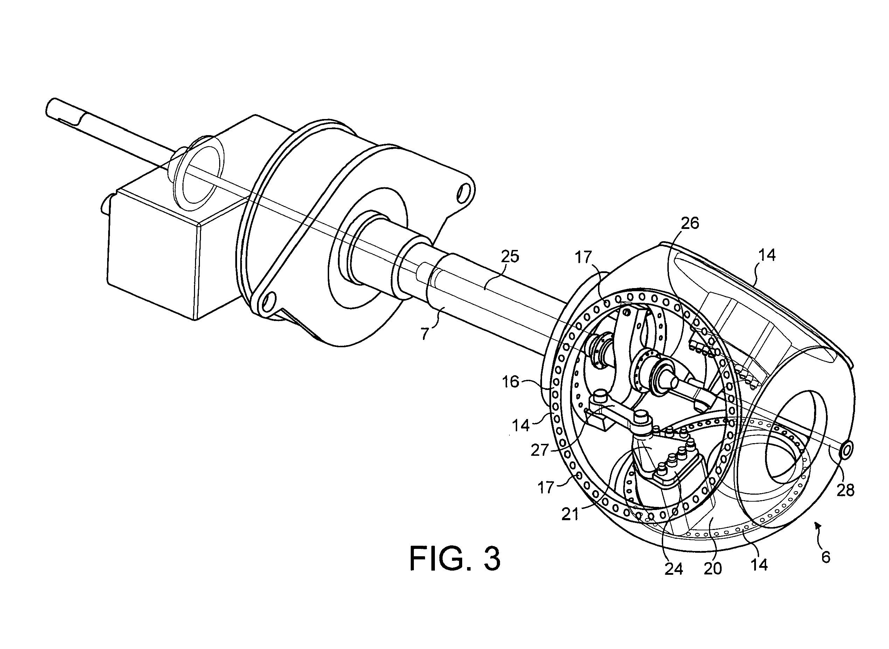

As explained above, in connection with Figure 1, the rotor blades 5 have the shape of an aerofoil along much of their length in order to provide a lifting force from the incident wind. The rotor blades 5 are connected to the rotor blade hub 6 by means of a rotor blade root that is circular in cross section. In the example shown in Figure 3, the rotor blade hub 6 comprises a blade root pivot joint 14, for connection to the rotor blade root (not shown), having an annular connection surface in the form of a circular reinforced metal ring 16. Three rotor blade pivot joints 14 are shown in the diagram, equally angularly spaced around the hub 6.

Corresponding annular connection surfaces (not shown) are provided on the ends of the respective rotor blade roots and are joined to the corresponding surface 16 on the hub 6 by means of a plurality of bolts. The bore holes for receiving the bolts are visible in the diagram and are indicated by reference number 17. The annular connection surface of each blade root pivot joint 16 is able to rotate in the hub 6 by means of bearings (not shown), thereby allowing the rotor blades 5 to pivot under the control of a suitable actuation system.

A known actuation system will now be further described with reference to Figure 3. In this case, the pivot joints 14 further comprise a circular plate 20 connected to the interior circumference of the annular connection surface 16, and having an internally protruding shoulder 21 for rotation with the circular plate 20. The connection surface 16 and plate 20 can be formed as an integral component, or as separate components that are connected together at installation.

An actuator rod 25 mounted in the main shaft 7 of the wind turbine, is isolated from the rotation of the main shaft by suitable means, such as jewel bearings. The actuator rod 25 is controlled by a hydraulic system for forward and backward translational linear motion along a central axis. The actuator rod terminates at a traverse or collar 26, having three arms extending outwards from a point on the central axis. The end of each arm connects to a pivoting linkage 27 which connects in turn to the shoulder 21 on the circular plate 20 of the blade root pivot joint 21. In this way, linear movement of the actuator rod 25 acts on the collar 26, and via the linkages 27 on the shoulder 21 of the blade root pivot joints 14, turning each of the three pivot joints 14 by the same degree and, therefore, the rotor blades themselves. In alternative systems, control of the pitch of individual wind turbine blades may be required and a separate actuator rod and arrangement of traverse and linkage 26 and 27 required for each blade. An anti-rotation bar 28 is also provided to stabilise the collar against rotation induced in the component from the rotation of the main shaft.

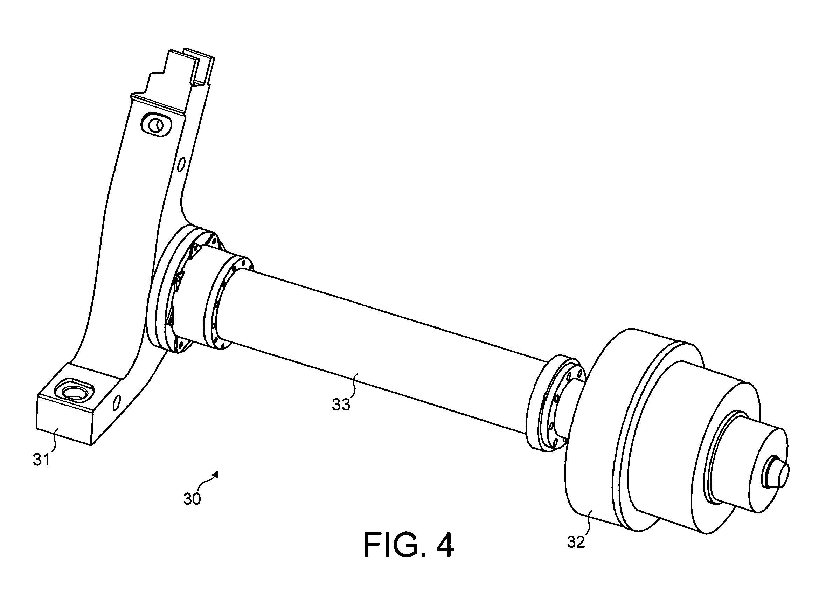

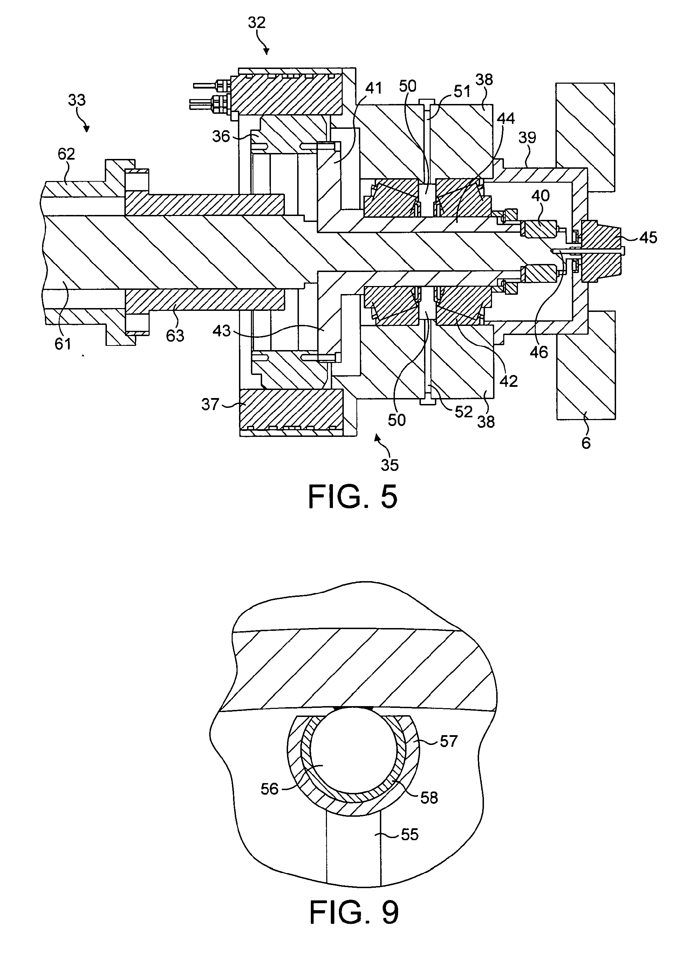

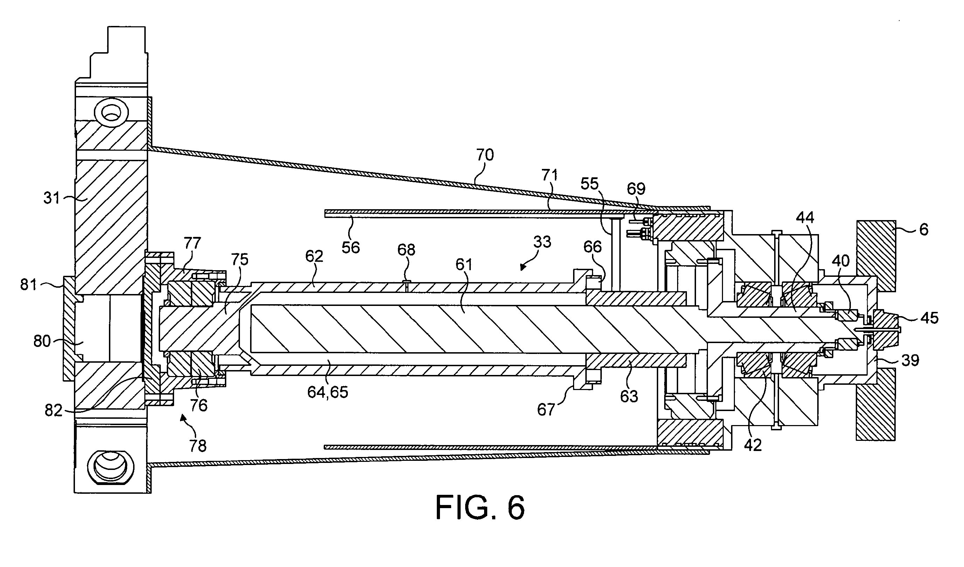

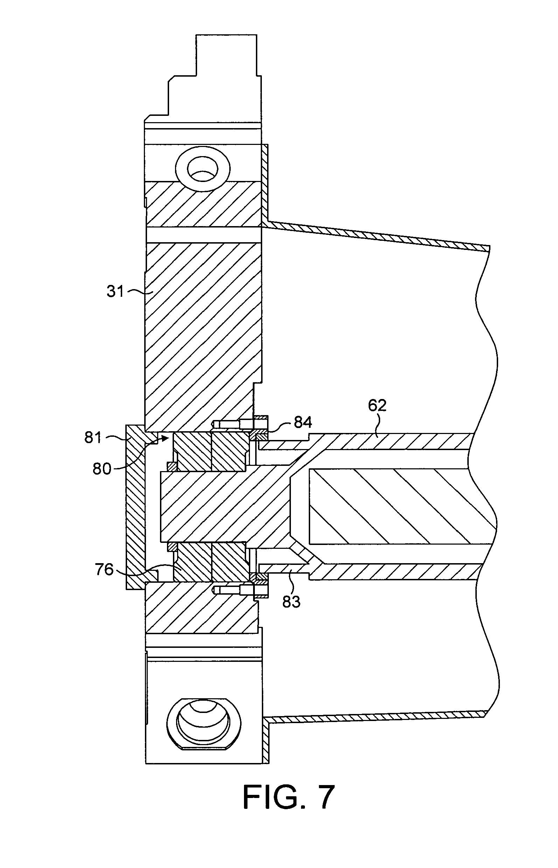

A first example embodiment of the invention will now be described with reference to figures 4 to 6, and 9. Figure 4 is a side elevation view of an actuation system 30 comprising a pitch actuator or blade root traverse 31, a motor 32 and an intermediate actuator rod 33. Figure 5 provides a cross-sectional view in more detail of the motor 32 and its connection to the actuator rod 33, while Figure 6 provides a longitudinal cross-section through the whole of the apparatus shown in Figure 4. Figure 7 shows in more detail the connection between the actuator rod 33 and the blade root traverse 31.

Referring now to Figure 5, the motor 32 and its connection to the actuator rod 33 will be described in more detail. In a preferred embodiment, the motor 32 is an electrical motor 35 comprising a rotor 36 and stator 37. The stator 37 comprises a number of electrical windings connected to an electrical power source (not shown). The windings are energised by a suitably arranged alternating electrical current from the power source and therefore generate a varying magnetic field in which the rotor 36 moves. In one embodiment, the electrical motor 35 is a high torque motor, or preferably a hollow shaft high torque motor, and the rotor 36 comprises a series of permanent magnets dovetailed or otherwise secured to the rotor body, for example by adhesive or mechanical attachment. In an alternative embodiment, the rotor 36 comprises similar electrical windings to the stator 37, and is caused to turn via the interaction of the induced electrical current with the magnetic field. The motor can be supplied with a coolant fluid, such as water, as this helps the motor operate at higher values of torque given the same diameter of rotor and stator.

The stator 37 is attached to motor housing 38, which is further attached by a mounting section or bracket 39 to the wall of the rotor hub 6. In this way, the stator 37 is fixed in its orientation with regard to the rotor hub 6, and the motor is securely attached. In one embodiment, the bracket 39 is attached to the wall of the rotor hub 6 towards its nose cone side.

The rotor 36 is attached to rotor collar 41, mounted in the motor housing 38 by means of roller bearings 42, such as but not limited to paired tapered roller bearings. A cavity 50 is provided between the roller bearings 42 and contains a lubricating medium, such as lubricating fluid or oil, for lubricating the bearings and collar. An access port 51 is provided at the top of the housing 38 for adding the lubricating medium to the cavity 50, and an access port 52 is provided at the bottom for draining the cavity 50. The access ports 51 and 52 may be opened and closed by means of screws or other suitable fasteners. The rotor collar 41 has a flange 43 that extends outwards from a central axis of rotation and which is used to support the rotor 36 adjacent and inside the stator 37. An annular section 44 of the collar 41 extends from the flange 43 longitudinally along the central axis. In this way, the weight of the rotor 37 is borne and evenly distributed among the roller bearings 42, thereby providing a stable coupling between the rotor 37 and the motor housing 38.

Referring briefly to Figure 6, the actuator rod 33 comprises a first rotatable member or shaft 61 mounted in a second non-rotatable member or shaft 62. A non-rotatable threaded collar 63 is mounted on the first rotatable shaft 61, such that rotation of the shaft 61 is converted into linear motion of the collar 63, and the non-rotatable shaft 62 against which it acts. The first rotatable shaft 61 is received inside the annular part of the rotor collar 44 and is secured to it by a suitable attachment such as nut 40. The nut 40 is adjustable to allow preloading of the motor bearings. This allows the motor to be preassembled before attachment to the first shaft 61. For stability, the first rotatable shaft 61 is secured inside the collar 44 where the collar 44 is supported by the roller bearings 42. The action of the rotor 36 is therefore directly coupled to the first shaft 61 without the need for gearing or other connection means. A suitable key between the rotor collar 44 and the first shaft 61 is provided however for the positive transfer of torque between the rotor 36 and the first shaft 61. The internal longitudinal axis of the actuator rod 33 corresponds to a longitudinal axis of the device, about which the first rotatable shaft 61, second shaft 62 and collar 63 are coaxially arranged.

At one end, the first rotary shaft 61 extends out of the motor housing 38 and is connected to a rotary encoder device 45 mounted to the housing 38. The encoder device 45 and the first rotary shaft 61 are connected directly by a screw or pin 46 so that they turn together. The screw is received in the encoder device 45 in a through-hole.and passes into a threaded section of the first shaft 61. As will be described later, the encoder controls 45 the torque applied by the motor and accordingly the speed and position of the rotor blade traverse 31. The electrical connections between the motor 35 and the encoder 45 are not shown to avoid obscuring the structural details in the diagram.

In the opposite direction, the first rotary shaft 61 extends out of the motor housing 38 towards the traverse 31. Outside of the rotor collar flange 41, the diameter of the first rotary shaft 61 has a larger cross-section than inside the annular portion 44, and extends in front of the motor housing by a distance that corresponds to the stroke length required to achieve the complete pitching of the rotor blades. Figure 6 shows the actuator rod in a fully retracted position as will be described below. In an example implementation of the invention, the required stroke length to pitch the blades is around 50cm, and the length of the first rotary shaft 61 is therefore at least 50cm.

Referring now to Figure 6, the non-rotatable threaded collar 63 mounted on the first rotary shaft 61, is connected to the second non-rotating shaft 62 by a suitable fastener, such as a bolt 66. In one embodiment, the end of the second non-rotating shaft 62 attached to the collar 63 is provided with a flange 67 that gives an increased surface area for ease of attachment. The collar 63 is secured against rotation by suitable cooperation with the interior of the hub 6 as desired, but is allowed freedom to move linearly with respect to the longitudinal axis of the actuator rod 33. A rod 55 and guide 56 arrangement secured to the wall of the rotor hub 6 or to other fixed elements inside the rotor hub can be used to achieve this, as will be known in the art. Referring briefly to Figure 9, one end of the rod is attached to the collar 63 (not shown) while the other terminates in a shoe 57 for receiving the guide 56. An anti-friction layer 57 can be provided between the shoe 58 and the guide 56 to ease movement. In this diagram the guide 56 is attached to a non-rotating part of the apparatus in the hub 6, known as the slide cylinder 71. The function of the slide cylinder 71 is described in more detail later.

As the collar 63 moves linearly, the second non-rotating shaft 62, which can be seen in this example as forming the exterior of the actuator rod 33, is also moved with respect to the first rotary shaft 61 and to the motor housing 38. The second shaft 62 therefore travels along the longitudinal axis of inside rotor hub in a translational movement. The second non-rotatable shaft 62, also bears against the traverse 31 and causes the traverse 31 to move linearly.

As shown more clearly in Figure 6, the non-rotatable second shaft 62 forms a cavity 64 in which the first rotary shaft 61 is housed. Advantageously, the connection of the threaded collar section 63 and the non-rotatable second shaft 62 provides a seal, such that the interior of the second non-rotatable shaft 62 forms a closed chamber 64. The chamber 64 is filled with a fluid, such as oil 65, in order to lubricate the first rotary shaft 61 as it turns in the threaded collar 63. As well as increasing the lifetime of the moving parts, the lubricating fluid allows heat to be drawn out of the system. A breather valve 68 or pressure release valve is provided in the non-rotating second shaft 62 to allow the pressure of the oil to equalise with external pressure as the first rotatable shaft rotates and the volume of the closed chamber 64 varies under the stroke from the rotation. An O-ring seal can also be used at the interface of the threaded collar section 63 and the non-rotatable second shaft 62.

In Figure 6, the electrical connections to the rotor, and water lines for cooling the stator are also shown and indicated by reference number 69.

In one embodiment, a load cell (not shown) is situated at the connection between the non-rotating threaded collar 63 and the non rotating second shaft 62 in order to measure the force applied by the motor arrangement to the traverse 31. A second load cell may be provided so that the force in both the push and pull directions can be measured. Alternatively, a single load cell can be adapted to operate in both the push and pull directions. The sensor output from the load cell can be fed back to the encoder device 45 as part of the sensor system, providing more detailed control of the pitch actuator system.

Also, as shown in Figure 6, the apparatus includes a rigid support member 70 connected to the side of traverse 31 and extending towards the motor housing 38. The traverse 31 has three arms that extend outwards from the centre of the longitudinal axis in order to join with linkages 27 that connect to shoulders 21 on the blade roots. A slide cylinder 71 is attached to the side of the motor housing 38, and can be shrunk fit to the outer surface of the motor housing or can be fastened by counter sunk screws. The outer surface of the slide cylinder 71 is coated with a substance to reduce friction, such as Polytetraflouroethylene PTFE). The rigid support member 70 has a flat end arranged to engage in a slideable fashion with the surface of the slide cylinder 71 with which it makes slideable contact.

The slide cylinder 71 extends towards the traverse 31 for a distance that accommodates the stroke motion of the actuator rod 33. As the actuator rod 33 extends relative to the motor housing 38 and the slide cylinder 71, the rigid support member 70 is carried by the traverse along the length of the cylinder 71. The rigid support member 70 and slide cylinder 71 protect the rotating elements in the actuator rod from any bending load transmitted to by the traverse 31 around the motor housing or the length of the actuator rod. Without, this arrangement, the operational life of the actuator rod may be reduced.

The connection between the non-rotating second member 62 and the traverse section 31 will now be explained in more detail. The non-rotating second shaft terminates 62 in a bearing axle 75, that is in turn supported on bearings 76, housed within an internal compartment 77 of a shoe or collar section 78. The shoe or collar section 78 is attached to the traverse 31 by suitable fasteners, such as bolts. The bearings 76 decouple the non-rotating second section 62 from any rotation of the traverse 31 about the longitudinal axis of the actuator rod 33. Such rotation can occur from the movement of the blade roots, the weight of the components in the hub as they turn, wind effects and so on. The bearings 76 therefore provide protection against for the non-rotating second shaft 62 and the rotating first shaft 61.

In some embodiments, the traverse 31 has an interior compartment 80, accessible by end cap 81 for maintenance and repair purposes. The end cap may be provided as a removable element or where access to the compartment is provided from the opposite side can be omitted and provided by the wall of the traverse. In Figure 6, the inner compartment 80 is sealed on the other side of traverse 31 by second cover 82 which provides a point of attachment for shoe or collar section 78. The inner compartment 80, end cap 81 and second cover 82 are optional in the embodiment shown in Figure 6, but may be employed to useful effect in the alternative embodiment of Figure 7.

In Figure 7, which shows an alternative arrangement for the traverse 31, the bearings 76 are housed in the inner compartment 80 of the traverse 31. In this arrangement, the second cover 82 can be omitted, and the non-rotatable second shaft 62 has a collar 83 that extends to engage with the traverse 31 through a rotary oil seal 84. This arrangement is more compact than the arrangement shown in Figure 6 and so can save valuable space in the hub.

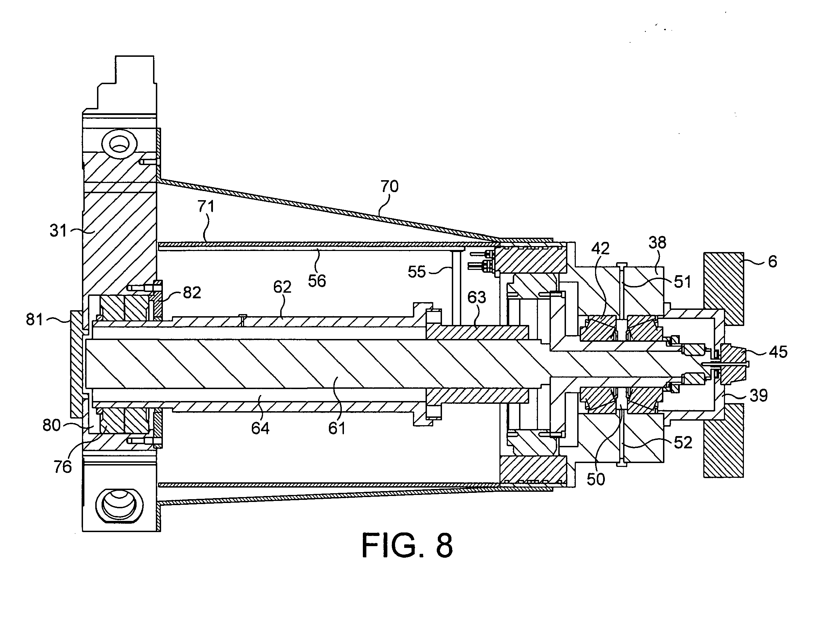

Figure 8 shows a further embodiment which allows space in the hub to be conserved. In this embodiment, the bearing axle 75 of the second non-rotating shaft 62 is omitted and the internal diameter of the inner compartment 80 is made larger than the external diameter of the second shaft 62. This allows the second non-rotating second shaft 62 to be received totally within the traverse 31. The end of the second non-rotating shaft 62 therefore acts like the bearing axle in the examples of Figures 6 and 7, and is supported on the bearings 76 housed in the inner compartments. In this example, the end of the inner chamber 64 furthest from the motor 32 is defined by the end cap 81, and the lubricating fluid 65 is allowed to fill the inner compartment 80 of the traverse 31. In this example, the second cover 82 is retained, and used to seal the opposite side of the inner compartment to the end cap 81. The second cover 82 therefore supports a rotary seal such as rotary oil seal for receiving and supporting the non-rotating second shaft 62. In this way, the lubricating fluid 65 can be used to lubricate the bearings as well as the rotating shaft 61.

In operation, the rotary encoder 45 receives a signal from the wind turbine control system to adjust the pitch angle of the wind turbine blades. Based on the sensor data available from the motor 32, the load cell, and positional data indicating the current pitch of the blades, the rotary encoder controls the motor 32 to turn the rotor 36. The rotor is instructed to turn at a speed that is sufficient to effect the change in pitch in the desired response time. The direction in which the rotor 36 turns determines whether the pitch angle is increased or decreased.

Assuming that the pitch angle is to be increased, the rotor turns in a first direction, and in doing so turns the first rotatable shaft 61 inside the second shaft 62. The collar 63 does not turn, but is caused by the rotation of shaft 61 inside the collar thread to move longitudinally and push the second shaft 62 longitudinally against the traverse 31. The traverse 31 also moves longitudinally and by means of the arm section and linkages 27 shown in Figure 3 acts on the blade shoulders 21 causing the blade roots and the blades themselves to turn about their span wise axis.

In an example embodiment, the rotary first shaft 61 and non-rotating threaded collar 63 are advantageously implemented using a ball screw apparatus. This arrangement is in fact shown in Figures 5, 6 and 8, in which the ball screw forms the rotary first shaft 61 and the ball screw nut forms the collar 63. In alternative examples, a lead screw or a roller screw can be used.

In a further alternative embodiment, the electric motor 35 can be replaced with a hydraulic motor and the free end of the ball screw can be modified to accommodate a rolling element. The inner diameter of the rolling element is then mounted on the ball screw, and the outer diameter of the rolling element mates with a hydraulic piston or equivalent. In this embodiment, the through hole in the centre of the non-rotating second shaft 62 can be eliminated. This allows the ball screw to be connected to a hydraulic motor.

In a further alternative embodiment, the wind energy power plant comprises a threaded section on the first shaft and a corresponding threaded section on the second shaft, such that the second linkage is constrained for longitudinal motion along the first longitudinal axis. This allows the threaded collar to be omitted and provides a direct connection between the first and second shaft that minimises the number of interlocking parts. A suitable seal arrangement, such as bearings and washers, can be provided between the two shafts to provide the closed chamber that acts as a fluid reservoir.

A particular example of the invention therefore comprises an electrical pitch actuator 30 utilising a ball screw arrangement in which the ball screw is rotated at specific speeds by a high torque motor 35. The ball screw itself is prevented from moving linearly by its attachment to the motor 35, but as the ball screw rotates the nut makes a linear movement, which is used for the back and forth movement of the traverse 31. The speed of traverse, position of traverse and the torque applied by the motor are to a large extent controlled by the encoder 45, load cell 38 and control system. The rotary encoder 45 directly mounted on to the ball screw determines the value of the speed of rotation. In this way, there is no slippage in the speed of rotation, and the quality of the control system is improved. Further, the load cell 38 mounted on the line of application of force gives the information of torque applied or the torque required.

The direct connection between the rotor and the ball screw is advantageous, as it avoids the use of friction couplings which can fail at high torque and are subject to fatigue. The direct connection however allows for the correct mechanical loading of the system, and efficiently uses space in the rotor hub. As the bearings and connections are provided on one side of the motor and the ball screw extends on the other, the apparatus is highly stable. In this example, therefore, the pitch actuation system is modular and can be located entirely in the hub.

Electrical systems provide advantages over hydraulic systems that otherwise require a large reservoir of fluid. Such reservoirs are often housed in the nacelle and take up valuable space. Although, a hydraulic motor could also be used in embodiments of the invention, the electric motor contemplated avoids problems with leakage of hydraulic fluid, and is easier to access and repair.

The above description is intended to illustrate example embodiments of the invention, but should not be taken to limit in any way the invention as it is defined by the claims.

## Claims

1. A wind energy power plant comprising a nacelle, one or more rotor blades connected to a rotor hub, and a rotor blade pitch actuator, the rotor blade pitch actuator comprising:
a first shaft (61), mounted for rotational movement around a longitudinal axis of the actuator;
a second shaft (62), mounted for translational movement along the longitudinal axis of the actuator, wherein the second shaft and the first shaft are situated so that one is at least partly housed inside the other, and the second shaft is coupled to the blade root of at least one of the one or more rotor blades, such that the translational movement of the second shaft along the first longitudinal axis results in rotation of the blade root and adjustment of the blade pitch;
a motor (35), coupled to the first shaft for driving its rotation;
a linkage (63) coupled to the first shaft for converting the rotational motion of the first shaft into translational motion of the second shaft.

2. The wind energy power plant of claim 1, wherein the first shaft is mounted to rotate inside a reservoir of lubricating fluid.

3. The wind energy power plant of claim 1 or 2, wherein the second shaft comprises a closed chamber in which the first shaft is received, the closed chamber containing lubricating fluid.

4. The wind energy power plant of claim 1, 2 or 3, wherein the linkage is a threaded collar, sealably engaging the second shaft, and mounted on the first shaft for translational movement along the longitudinal axis and, optionally:
the first shaft is a ball screw and the linkage is a ball screw nut.

5. The wind energy power plant of claim 4, comprising a load sensor located between the threaded collar and the second shaft.

6. The wind energy power plant of claims 1 or 2, wherein the linkage is a threaded section on the first shaft and a corresponding threaded section on the second shaft, such that the second shaft is constrained for longitudinal motion along the longitudinal axis.

7. The wind energy power plant of any preceding claim, wherein the first and second shafts are arranged coaxially with respect to one another.

8. The wind energy power plant of any preceding claim, wherein the motor is an electric motor having a motor body, a rotor and a stator, and the first shaft is coupled to the rotor and extends from the motor body on one side towards the second shaft and:
optionally the first shaft and rotor are connected directly to one another, and are mounted to rotate collinearly about the same longitudinal axis;
optionally the motor body comprises a mounting disposed on the opposite side of the motor to the second shaft, for attachment to the wind turbine, and wherein the first shaft is received in the mount at a rotatable joint;
optionally the power plant comprises a controller disposed at the mounting section for controlling the motor and the speed of rotation of the rotor and first shaft, the controller further optionally comprising a sensor mounted on the first shaft in the mounting section for determining the speed of rotation.

9. The wind energy power plant of any of claims 1 to 7, wherein the motor is a hydraulic motor and the first shaft is a rotatable drive shaft extending from the motor.

10. The wind energy power plant of claim 3, wherein the second shaft comprises at one end:
a blade root traverse, coupled to each of the rotor blade roots, for converting translational movement of the second shaft into rotational movement of each of the rotor blade roots, and optionally:
the wind energy power plant of claim comprises a rigid support member coupled between the blade root traverse and the body of the motor, to protect the first and second shafts from bending torques.

11. The wind energy power plant of claim 10, wherein the blade root traverse comprises a compartment having one or more bearings, and the end of the second shaft is received in the compartment and supported by the one or more bearings and optionally:
at the end of the second shaft, there is an axle having a smaller diameter than the second shaft, and wherein the axle is supported by the one or more bearings.

12. The wind energy power plant of claim 10 or 11, wherein the compartment is housed inside the blade root traverse.

13. The wind energy power plant of claim 11, wherein the compartment is housed inside the blade root traverse, and the end of the second shaft is open, such that the closed chamber is defined by the second shaft and the inner compartment of the blade root traverse.

14. The wind energy power plant of claim 10, comprising a slide member connected to the body of the motor for slideably engaging with the end of the optional rigid support member as the second shaft moves translationally.

15. The wind energy power plant of any preceding claim wherein the pitch actuation system is located solely within in the rotor blade hub.

## Amended claims

### Amended claims in accordance with Rule 137(2) EPC.

**1.** A wind energy power plant comprising a nacelle, one or more rotor blades connected to a rotor hub, and a rotor blade pitch actuator, the rotor blade pitch actuator comprising:
a first shaft (61), mounted for rotational movement around a longitudinal axis of the actuator;
a second shaft (62), mounted for translational movement along the longitudinal axis of the actuator, wherein the second shaft and the first shaft are situated so that one is at least partly housed inside the other, and the second shaft is coupled to the blade root of at least one of the one or more rotor blades, such that the translational movement of the second shaft along the first longitudinal axis results in rotation of the blade root and adjustment of the blade pitch;
a motor (35), coupled to the first shaft for driving its rotation;
a linkage (63) coupled to the first shaft for converting the rotational motion of the first shaft into translational motion of the second shaft, wherein the linkage is a threaded collar, sealably engaging the second shaft, and mounted on the first shaft for translational movement along the longitudinal axis; and
a load sensor located between the threaded collar and the second shaft.

**2.** The wind energy power plant of claim 1, wherein the first shaft is mounted to rotate inside a reservoir of lubricating fluid.

**3.** The wind energy power plant of claim 1 or 2, wherein the second shaft comprises a closed chamber in which the first shaft is received, the closed chamber containing lubricating fluid.

**4.** The wind energy power plant of claim 1, 2 or 3, wherein the first shaft is a ball screw and the linkage is a ball screw nut.

**5.** The wind energy power plant of any preceding claim, comprising a second load sensor, wherein the first and second load sensors measure the force in the push and pull directions respectively.

**6.** The wind energy power plant of claims 1 or 2, wherein the linkage is a threaded section on the first shaft and a corresponding threaded section on the second shaft, such that the second shaft is constrained for longitudinal motion along the longitudinal axis.

**7.** The wind energy power plant of any preceding claim, wherein the first and second shafts are arranged coaxially with respect to one another.

**8.** The wind energy power plant of any preceding claim, wherein the motor is an electric motor having a motor body, a rotor and a stator, and the first shaft is coupled to the rotor and extends from the motor body on one side towards the second shaft and:
optionally the first shaft and rotor are connected directly to one another, and are mounted to rotate collinearly about the same longitudinal axis;
optionally the motor body comprises a mounting disposed on the opposite side of the motor to the second shaft, for attachment to the wind turbine, and wherein the first shaft is received in the mount at a rotatable joint;
optionally the power plant comprises a controller disposed at the mounting section for controlling the motor and the speed of rotation of the rotor and first shaft, the controller further optionally comprising a sensor mounted on the first shaft in the mounting section for determining the speed of rotation.

**9.** The wind energy power plant of any of claims 1 to 7, wherein the motor is a hydraulic motor and the first shaft is a rotatable drive shaft extending from the motor.

**10.** The wind energy power plant of claim 3, wherein the second shaft comprises at one end:
a blade root traverse, coupled to each of the rotor blade roots, for converting translational movement of the second shaft into rotational movement of each of the rotor blade roots, and optionally:
the wind energy power plant of claim comprises a rigid support member coupled between the blade root traverse and the body of the motor, to protect the first and second shafts from bending torques.

**11.** The wind energy power plant of claim 10, wherein the blade root traverse comprises a compartment having one or more bearings, and the end of the second shaft is received in the compartment and supported by the one or more bearings and optionally:
at the end of the second shaft, there is an axle having a smaller diameter than the second shaft, and wherein the axle is supported by the one or more bearings.

**12.** The wind energy power plant of claim 10 or 11, wherein the compartment is housed inside the blade root traverse.

**13.** The wind energy power plant of claim 11, wherein the compartment is housed inside the blade root traverse, and the end of the second shaft is open, such that the closed chamber is defined by the second shaft and the inner compartment of the blade root traverse.

**14.** The wind energy power plant of claim 10, comprising a slide member connected to the body of the motor for slideably engaging with the end of the optional rigid support member as the second shaft moves translationally.

**15.** The wind energy power plant of any preceding claim wherein the pitch actuation system is located solely within in the rotor blade hub.
